Europäisches Patentamt

European Patent Office

Office européen des brevets

(11) Publication number: **0 045 545**

**B1**

(12) **EUROPEAN PATENT SPECIFICATION**

(45) Date of publication of patent specification: **07.11.84**

(21) Application number: **81200825.8**

(22) Date of filing: **20.07.81**

(51) Int. Cl.³: **H 02 B 11/14, H 02 B 11/02**

(54) **Device for displacing an electric switch in its cupboard.**

(30) Priority: **31.07.80 IT 2384280**

(43) Date of publication of application:
**10.02.82 Bulletin 82/06**

(45) Publication of the grant of the patent:
**07.11.84 Bulletin 84/45**

(84) Designated Contracting States:
**AT BE CH DE FR GB LI LU NL SE**

(56) References cited:
**FR-A-1 066 100**
**US-A-3 188 414**
**US-A-4 004 113**

(73) Proprietor: **ANSALDO S.p.A.**
**Via Pacinotti, 20**
**I-16151 Genova-Sampierdarena (IT)**

(72) Inventor: **Grassi, Renzo**
**Via Canaletto 15**
**I-20133 Milano (IT)**

(74) Representative: **Henke, Erwin et al**
**Ing.Barzanò & Zanardo S.p.A. Via Borgonuovo,**
**10**
**I-20121 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an electric switch arranged in a cupboard in which it can be displaced and from which it can even be completely withdrawn.

More particularly, this invention relates to a device for displacing an electric switch in a compartment of a cupboard which can be closed by a door, said switch being displaceable on fixed guideways in the compartment from a "disconnected" to a "connected" position relative to the mains and vice versa, the device comprising driving means mounted in the compartment which can be shifted in order to displace the switch from the "disconnected" to the "connected" positions relative to the mains and vice versa, means for controlling the shifting of said driving means in either direction, and a first member jutting from the switch and capable of being engaged by said driving means for displacing the switch.

A device of this kind is known from document FR—A—1 066100.

In this known device the driving means for the displacement of the switch in the compartment consists of a pair of side plates fixed to a rotatable shaft which is journaled in stationary supports, profiled edges of these plates being able to engage pins jutting laterally from the switch in order to displace it in either direction on the guideways. Control means for rotating said plates comprise a shaft having a wormed end engaging a nut hinged to one of said plates, said shaft being adapted to be actuated by a winch to be introduced through a first bore formed through the compartment door for engagement with the free end of the shaft. A locking plate is movably mounted on one of the guideways for the switch, said locking plate being adapted to be shifted between a higher and a lower position by means of an actuation rod projecting through a second bore formed through the compartment door. When the locking plate takes the lower position, a slider connected to said actuation rod closes said first bore formed in the door thus preventing introduction of said winch and its engagement with the shaft controlling the rotation of the side plates for the displacement of the switch. A pin kinematically connected to the movable contacts of the switch cooperates with the locking plate for preventing the same to take its higher position when the switch is "ON" and for preventing the closure of the switch when the locking plate is in its higher position. Thus the known device enables the displacement of the switch in the interior of the cupboard compartment with the door closed and acting from the outside and in addition the device is such as to ensure that the switch displacement operation is possible only when the switch is placed willfully in the "OFF" position.

However, the device known from document FR—A—1 066 100 is of a rather complex construction with a relative great number of component parts.

Other devices for displacing an electric switch in a cupboard are shown in US—A— 3 188 414 and US—A—4 004 113. Also these known devices have a quite complicated construction.

Thus, it is an object of the present invention to improve the known devices for displacing an electric switch and to provide a device which can simply be constructed and is of higher reliability.

This object is achieved according to the invention, with a device of the kind as above defined, which device is characterized in that the driving means consist of a carriage displaceable on a fixed guide parallel to the route of the switch displacement on said guideways and in that it further comprises:

a second member jutting from the switch and adapted to take two positions relative to the switch, one of shorter projection and the other of longer projection;

means incorporated in the switch for preventing said second member from taking the position of shorter projection when the switch is "ON" and for preventing the closure of the switch when said second member is in the position of shorter projection, said guide cooperating with said second jutting member to keep it in the position of shorter projection;

two notches, provided in said guide in correspondence with the "disconnected" and "connected" positions of the switch relative to the mains to enable said second member to take its position of longer projection;

a slider displaceable along said guide against the bias of resilient means from a position in which it prohibits the actuation of said control means of the carriage displacement to a position in which it makes such an actuation possible, said slider being accessible from the outside through a bore formed through the compartment door by a tool for actuating the control means, and

cammed means on said slider adapted to cooperate with said second member jutting from the switch to bring said member in its position of shorter projection as a result of the shifting of said slider from the position in which it prohibits the actuation of said control means to the position in which it permits such an actuation, irrespective of the location of the switch in the "connected" and "disconnected" positions relative to the mains.

Quite advantageously, said means for controlling the displacement of the driving carriage may consist of an endless screw supported for rotation in either direction in the compartment and engaged by a nut formed in the carriage.

Such an endless screw is aligned with the door bore and has, at a determined distance from the latter, a square cross-sectional portion for being actuated by a specially provided wrench.

This square cross-sectional portion can be accessed to only if the slider has previously been displaced, and such a displacement can be brought about by urging with the actuating spanner aforementioned, as introduced through the door bore.

The structural and functional features of the device according to this invention will become more clearly apparent from the ensuing description of an exemplary embodiment as illustrated in the accompanying drawings, wherein:

Figure 1 shows diagrammatically in plan view the cupboard compartment which houses the switch and the attendant displacement device.

Figures 2 and 3 are vertical cross-sectional views, taken along the lines II—II and III—III of Figure 1, respectively, and

Figure 4 is akin to Figure 3, but the switch is shown during its displacement.

As can be seen in the drawings, in a housing cupboard which is not illustrated in more detail, a compartment 10 is provided, which can be frontally closed by a door 11 and is intended to house a switch, generally indicated by its outline 12.

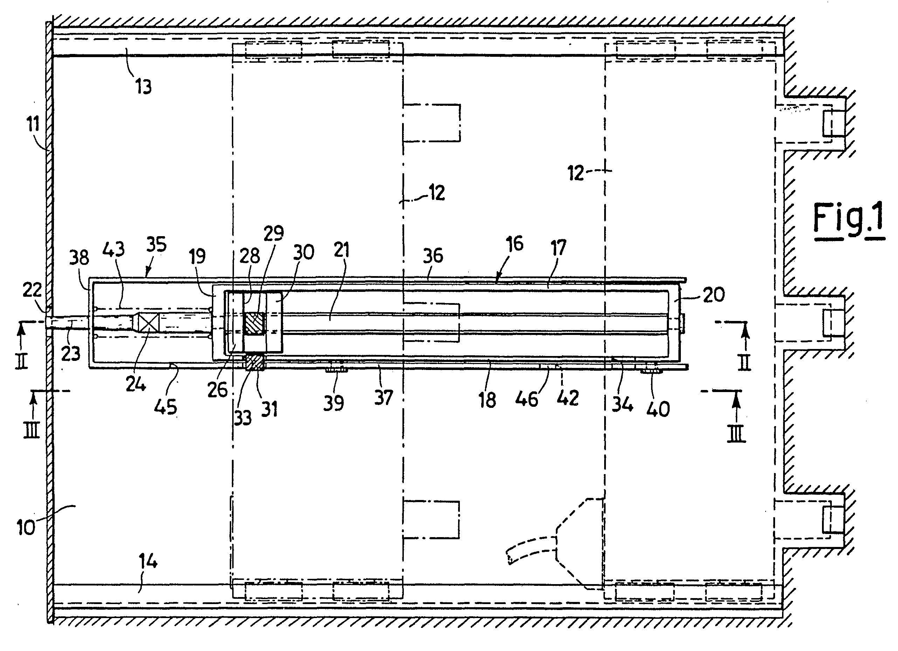

On the bottom wall 15 of the compartment 10 there are sliding guideways 13, 14 for shifting the switch assembly 12 from a "disconnected" position (shown in dash-and-dot lines) close to the door 11 to a "connected" position (shown in dotted lines, in Figure 1).

In the central area between the two guides 13 and 14 and parallely thereto, there is secured to the bottom wall 15 of the compartment 10 another guideway, generally indicated at 16, which comprises two sidewalls 17, 18 and two walls 19, 20 located crosswise at the ends.

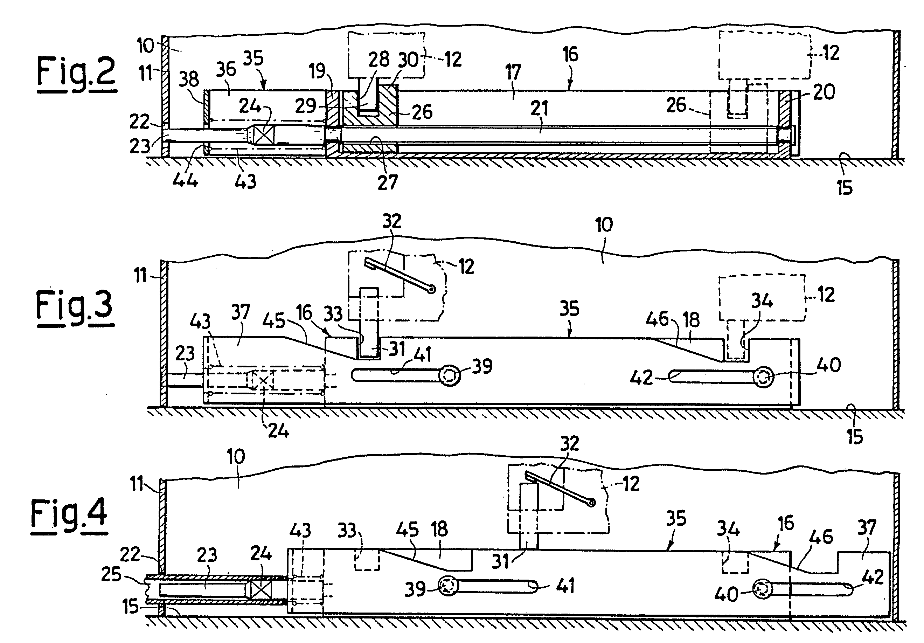

In the cross walls 19 and 20 a worm 21 is borne so as to be freely rotated in both directions. The axis of said screw is parallel to the guideways 13, 14 and is aligned with a bore 22 formed through the door 11 when the latter is shut. The screw 21 is prevented from being shifted axially and is extended, after having crossed the wall 19, by a smooth circular shank 23 until coming into registry with the bore 22 through the door 11. At a certain distance apart from the door 11, the shank 23 has a portion 24 with a square cross-sectional outline which is adapted to be engaged by a tubular wrench 25 (best in Figure 4). Between the sidewalls 17, 18 of the guideway 16 a carriage is allowed to slide, which is engaged through a central through-nut 27 by the worm 21. It is apparent that, by turning the worm in either direction, the carriage 26 is shifted along its axis.

The carriage 26 has at its top a transversal hollow space 28 which can be engaged by a first square-sectional pin 29 which juts downwards from the switch assembly 12. In the following disclosure, this pin 29 will be dubbed a driving pin, inasmuch as it is apparent that, when it is engaged in the hollow space 28 of the carriage 26 and the carriage is caused to travel, it draws the entire switch assembly with it. This driving pin 29 can take two positions, viz.: a depressed position shown in Figure 2, wherein it can engage a hollow space 28 of the carriage 26, and a lifted position, wherein it is incapable of doing so but abuts a shoulder 30 of the carriage 26. To the ends of the present invention the means for bringing the pin 29 to its lifted position and to hold it in certain situations is of no interest so that such means will not be described in detail or shown in the drawings.

On the same transversal plane as the pin 29, the switch 12 has a second pin 31 which likewise juts downwards and is shifted laterally. Also this pin 31, which, due to its functions, will be dubbed a latching pin, may take two positions, one of shorter projection, and the other of longer projection relative to the switch 12. Its position of longer projection, as viewed in Figure 3, can be taken by the pin either by its own weight or by the bias of a spring (not shown). The internal mechanism of the switch 12 are so connected to a stop lever 32 as to take a position in which it holds the latching pin 31 in the depressed position when the contacts of the switch 12 are closed, and to take, instead, a position wherein the pin 31 can be lifted to its position of shorter projection only and exclusively when the switch contacts are open and the snap springs of the switch are unloaded. Also these internal linkages of the switch which bring about the two positions of the stopping lever 32 consistently with the closed or the open condition of the switch are not of immediate interest for the present invention, so that they are neither described in detail herein nor shown in the drawings. It is sufficient to bear in mind that, when the switch is closed, the lever 32 prevents the pin 31 from being lifted and holds it down, whereas, when the switch is open, it permits that the pin 31 may be lifted. In addition, in this latter position, when the pin 31 is lifted, the lever 32 prevents the switch contacts from being closed.

When the switch 12 is positioned on the sliding guideways 13, 14 in the compartment 10, its latching pin 31 is in registry with the sidewall 18 of the guideway 16 (see Figure 1). Now, the top plane of the sidewall 18 is at such a level as to hold the latching pin in its lifted position. Only in two positions, which correspond to the "connected" and the "disconnected" positions of the switch 12 relative to the mains, the sidewall 18 has notches 33 and 34, respectively, which permits that the latching pin 31 may be lowered to its position of longer projection.

On the sidewalls 17, 18 of the guideway 16, there is slidably mounted a slider, generally indicated at 35, having the shape of a "U" with two sidewalls 36, 37 and a cross wall 38. Slider 35 is supported at least by the sidewall 18 of the guideway 16 by two pins 39, 40, which are secured to the sidewall 18 and are inserted into longitudinal slots 41, 42, as formed through the corresponding sidewall 37 of the slider 35. The length of these slots 41, 42 defines the stroke of possible displacement of the slider 35, which is normally held in the position shifted leftwards (as viewed in Figures 2, 3) by a spring 43 which acts between the cross wall 38 of the slider and the cross wall 19 of the fixed guideway 16.

It should be noted that the shank 23 of the worm 21 freely passes through a bore 44 formed through the cross wall 38 of the slider 35 and that in the position of rest (shifted leftwards) of the latter, the square-sectional portion 24 of the worm 21 is in the space between the cross walls 19 and 38, and thus cannot be directly accessed to on the side of the door 11. In order to be able to access by a tubular wrench 25 (see Fig. 4), introduced through the bore 22 of the door 11 until contacting the wall 38 of the slider 35, the square portion 24 of the worm 21, it is required, at the outset, to push back the slider 35 by the same wrench 25 against the bias of the spring 43 until the squared portion 24 is unmasked and may be grasped by the tool.

The sidewall 37 of the slider 35 has a top horizontal plane which is at the same level as the top plane of sidewall 18 of the guideway 16. The latching pin 31 of the switch cooperates with both these sidewalls of the guideway 16 and the slider 35, respectively. Now, in the same way as the sidewall 18 of the guideway 16 exhibits the notches 33, 34 which eñable the pin 31 to be lowered, also the sidewall 37 of the slider 35 has cammed grooves 45 and 46, which are formed, each, by a lower portion and an incline which rises to the top plane of the sidewall 37 in the direction towards the cross wall 38 of the slider 35. When the slider 35 is in its at rest position (see Figure 3) the lower portion of the two grooves 45, 46 is aligned transversally with the notches 33, 34 of the sidewall 18. Thus, under these conditions, the latching pin 31 of the switch is allowed to reach its lowered position irrespective of the fact that the switch 12 is in its "disconnected" or in its "connected" position relative to the mains.

If, starting from this position, the slider 35 is pushed back by the tool 25 as outlined above, the latching pin 31 engaging either groove 45 or 46 is lifted by the incline of the relative groove until reaching the top plane of the sidewalls 37 and 18. It is apparent that the backward shift of the slider 35 cannot take place if the pin 31 is firmly held in its depressed position by the stopping lever 32 of the switch 12.

The operation of the device described in the foregoing is thus as follows:

Let it be assumed that the switch 12 has already been housed in the compartment 10 and placed on the sliding guideways 13, 14 and that the carriage 26 is in the position at the left (as viewed in Figures 2 and 3) corresponding to the "disconnected" position of the switch 12. When introducing the switch 12 into the compartment 10 through the open door 11, it cannot be pushed farther forward manually since its driving pin 29 anyhow abuts the shoulder 30 of the carriage 26. Let it be also assumed that the driving pin 29 is free to engage, now, the transversal hollow space 28 of the carriage 26 and that the switch contacts are open. The latching pin 31 is depressed and engages the notch 33 of the sidewall 18 of the fixed guideway 16 and the lower portion of the hollow space 45 of the sidewall 37 of the slider 35, but, since it is not engaged by the lever 32 of the switch, it can be lifted to its position of shorter projection.

Let it be assumed, moreover, that the door 11 of the compartment 10 is closed and that it is desired, now, to shift the switch 12 to its "connected" position.

Then, the tubular wrench 25 is slipped through the bore 22 of the door 11 and the slider 35 is pushed backwards: this can now be done since the latching pin 31 is free to be lifted under the thrust of the incline of the groove 45. With the switch closed, the pin 31 held down by the lever 32 would prevent the backward stroke of the slider 35.

As the tubular wrench 25 grips the squared portion 24 of the worm 21, the screw can be rotated thereby and can cause the translational motion of the carriage 26 which drags with it the switch assembly 12 as a whole.

It is to be noted that during this translational motion the latching pin 31 of the switch glides on the top plane of the sidewalls 18 and 37, respectively, of the guide way 16 and the slider 35 so that it is held lifted, thus preventing that during this stage the switch 12 may be closed.

As the switch 12 reaches its "connected" position relative to the mains, the tubular wrench 25 is withdrawn so that the slider 35 is permitted to take its at rest position again, under the bias of the spring 43. During this movement of the slider, the incline of its groove 46 permits that the latching pin 31 be gradually depressed so that it simultaneously enters the notch 34 of the fixed guideway 16. By so doing, the switch 12 is latched in its "connected" position and can be closed by an appropriate control. As a matter of fact, the pin 31, as it lies in its position of longer projection, cannot prevent the closing stroke of the switch 12 any longer.

As can be appreciated from the foregoing, all these operations have been performed with the door 11 closed and under conditions of absolute safety.

For the reverse manoeuver, that is to shift the switch from its "connected" position to its "disconnected" position relative to the mains, it is required that the same procedure as before be followed, with the exception that the direction of rotation impressed to the tubular wrench to turn the worm 21 be reversed. Until such time as the switch 12 is not opened, the stopping lever 32 holds the latching pin 31 down and thus prevents any backward displacement of the slider 35, that which is practicable only if the pin 31 is permitted to rise.

To withdraw the switch 12 from the compartment 10 when the switch itself is in its "disconnected" position, it is required that both the driving pin 29 be lifted for making it clear of the hollow space 28 of the carriage 26, and that the latching pin 31 be lifted to clear it of the notch 33 of the sidewall 18 of the fixed guideway 16. Lifting these pins is an operation which can be done also manually and the pin 31 can be lifted only if the switch is open.

## Claims

1. A device for displacing an electric switch (12) in a compartment (10) of a cupboard which can be closed by a door (11), said switch (12) being displaceable on fixed guideways (13, 14) in the compartment (10) from a "disconnected" to a "connected" position relative to the mains and vice versa, comprising driving means (26) mounted in the compartment (10) which can be shifted in order to displace the switch (12) from the "disconnected" to the "connected" position relative to the mains and vice versa, means (21, 23, 24) for controlling the shifting of said driving means (26) in either direction, and a first member (29) jutting from the switch (12) and capable of being engaged by said driving means (26) for displacing the switch (12), characterized in that said driving means consists of a carriage (26) displaceable on a fixed guide (16) parallel to the route of the switch displacement on said guideways (13, 14) and in that it further comprises:

a second member (31) jutting from the switch (12) and adapted to take two positions relative to the switch (12), one of shorter projection and the other of longer projection;

means (32) incorporated in the switch (12) for preventing said second member (31) from taking the position of shorter projection when the switch is "ON" and for preventing the closure of the switch (12) when said second member (31) is in the position of shorter projection, said guide (16) cooperating with said second jutting member (31) to keep it in the position of shorter projection;

two notches (33, 34), provided in said guide (16) in correspondence with the "disconnected" and "connected" positions of the switch (12) relative to the mains, in order to enable said second member (31) to take its position of longer projection;

a slider (35) displaceable along said guide (16) against the bias of resilient means (43) from a first position in which it prohibits the actuation of said control means (21, 23, 24) of the carriage displacement to a second position in which it makes such an actuation possible, said slider (35) being accessible from the outside through a bore (22) formed through the compartment door (11) by a tool (25) for actuating the control means (21, 23, 24), and

cammed means (45, 46) on said slider (35) adapted to cooperate with said second member (31) jutting from the switch (12) to bring said member (31) in its position of shorter projection as a result of the shifting of said slider (35) from the position in which it prohibits the actuation of said control means (21, 23, 24) to the position in which it permits such an actuation, irrespective of the location of the switch (12) in the "connected" and "disconnected" positions relative to the main.

2. Device according to claim 1, characterized in that the means for controlling the translational motion of the carriage (26) consist of a worm (21) freely supported for rotation but axially immovable in said guide (16) in axial alignment with the door bore (22), said worm (21) being engaged by a through-nut (27) formed in said carriage (26).

3. Device according to claim 2, characterized in that the worm (21) has a smooth cylindrical shank (23) extended to the door bore (22) and a portion (24) having a square cross-section spaced from said door (11).

4. Device according to claim 3, characterized in that said slider (35) mounted on said guide (16) has a transverse wall (38) fitted with a bore (44) for the free passage of the shank (23) and the square portion (24) of the worm (21), said transversal wall (38) being interposed, in said first position of the slider (35), between the door (11) and the square portion (24) of the worm shank (23).

## Patentansprüche

1. Vorrichtung zum Verschieben eines elektrischen Schalters (12) in einem Abteil (10) eines Schrankes, das durch eine Tuer (11) verschliessbar ist, wobei der Schalter (12) in dem Abteil (10) auf ortsfesten Fuehrungen (13, 14) von einer "nicht verbundenen" in eine "verbundene" Lage in Bezug auf das Netz und umgekehrt verschiebbar ist, umfassend ein Antriebsmittel (26) das in dem Abteil (10) angeordnet ist und das verschoben werden kann, um den Schalter (12) von der "nicht verbundenen" Lage in die "verbundene" Lage in bezug auf das Netz und umgekehrt zu verschieben, Mittel (21, 23, 24) zur Steuerung der Verschiebung des genannten Antriebsmittels (26) in beiden Richtungen und ein erstes, von dem Schalter (12) vorstehendes Glied (29), das geeignet ist, seitens des genannten Antriebsmittels (26) zur Verschiebung des Schalters (12) erfasst zu werden, dadurch gekennzeichnet, dass das genannte Antriebsmittel aus einem, an einer ortsfesten Fuehrung (16) parallel zu dem Verschiebungsweg des Schalters auf den Fuehrungen (13, 14) verschiebbaren Wagen (26) besteht und dass sie ferner umfasst:

ein zweites, vom Schalter (12) vorstehendes Glied (31), das geeignet ist, dem Schalter (12) gegenueber zwei Lagen einzunehmen, eine in der es weniger vorsteht und die andere in der es weiter vorsteht;

Mittel (32) im Schalter (12), um zu verhindern, dass das genannte zweite Glied (31) die weniger vorstehende Lage einnimmt, wenn der Schalter "eingeschaltet" ist und um das Schliessen des Schalters (12) zu verhindern, wenn sich das genannte zweite Glied (31) in der weniger vorstehenden Lage befindet, wobei die genannte Fuehrung (16) mit dem genannten zweiten vorstehenden Glied (31) derart zusammenwirkt, dass sie es in der weniger vorstehenden Lage haelt;

zwei in der genannten Fuehrung (16) in Uebereinstimmung mit der "nicht verbundenen" und der "verbundenen" Lage des Schalters (12) in bezug auf das Netz vorgesehene Einschnitte (33, 39), um es dem genannten zweiten Glied (31) zugestatten, seine weiter vorstehende Lage einzunehmen; einen Schieber (35), der laengs der genannten Fuehrung (16) entgegen der Wirkung elastischer Mittel (43) von einer ersten Lage, in der er die Betaetigung der genannten Steuermittel (21, 23, 24), der Wagenverschiebung verbietet, in eine zweite Lage, in der er diese Betaetigung ermoeglicht, verschiebbar ist, wobei der genannten Schieber (35) durch eine Oeffnung (22) in der Tuer (11) des Abteils mittels eines Werkzeuges (25) zugaenglich ist, um die Steuermittel (21, 23, 24) zu betaetigen, und

Steuernocken (45, 46) an dem genannten Schieber (35), die geeignet sind, mit dem genannten zweiten, vom Schalter (12) vorstehenden Glied (31) zusammenzuwirken, um dieses Glied (31), als Ergebnis der Verschiebung des genannten Schiebers (35) von der Lage, in der er die Betaetigung der genannten Steuermittel (21, 23, 24) verbietet, in die Lage, in der er diese Betaetigung gestattet, unabhaengig von der Stellung des Schalters (12) in der "verbundenen" und "nicht verbundenen" Lage in bezug auf das Netz, in seine weniger vorstehende Lage zu bringen.

2. Vorrichtung nach Anspruch 1, dadurch gekennzeichnet, dass die Mittel zur Steuerung der Verschiebebewegung des Wagens (26) aus einer in der genannten Fuehrung (16) in axialer Ausrichtung mit der Oeffnung (22) in der Tuer frei drehbar, aber axial unverschiebbar gelagerten Schraubenspindel (21) bestehen, welche Schraubenspindel (21) mit einem, in dem genannten Wagen (26) ausgebildeten, durchgehenden Muttergewinde (27) in Eingriff steht.

3. Vorrichtung nach Anspruch 2, dadurch gekennzeichnet, dass die Schraubenspindel (21) einen, sich gegen die Oeffnung (22) der Tuer erstreckenden glatten zylindrischen Schaft (23) und einen, im Abstand von der genannten Tuer (11) liegenden Abschnitt (29) mit quadratischen Querschnitt besitzt.

4. Vorrichtung nach Anspruch 3, dadurch gekennzeichnet, dass der genannte, auf der Fuehrung (16) angeordnete Schieber (35) eine Querwand (38) mit einer Oeffnung (44) zum freien Durchtritt des Schaftes (23) und des Abschnittes (24) mit quadratischem Querschnitt der Schraubenspindel (21) aufweist, welche Querwand (38) in der genannten ersten Lage des Schiebers (35) zwischen der Tuer (11) und dem quadratischen Abschnitt (24) des Schraubenschaftes (23) liegt.

**Revendications**

1. Un dispositif pour déplaçer un interrupteur éléctrique (12) dans un compartiment (10) d'une armoire de protection qui peut être fermé par une porte (11), ledit interrupteur (12) étant déplaçable sur des glissières fixes (13, 14) dans le compartiment (10) d'une position "hors circuit" à une "connecté" par rapport au secteur et vice versa, comprenant un moyen d'entrainement (26) monté dans le compartiment (10) qui peut être déplacé afin de déplacer l'interrupteur (12) de la position "hors circuit" a celle "connecté" par rapport au secteur et vice versa, des moyens (21, 23, 24) pour commander le déplacement dudit moyen d'entrainement (26) dans l'une et l'autre direction, et un premier organe (29) en saillie de l'interrupteur (12) et susceptible à être engagé par ledit moyen d'entrainement (26) pour déplacer l'interrupteur (12), caractérisé du fait que ledit moyen d'entrainement est constitué par un chariot (26) déplaçable sur une glissière fixe (16) parallele au trajet de déplacement de l'interrupteur sur lesdites glissières (13, 14) et du fait qu'il comprend en outre: un deuxième organe (31) en saillie de l'interrupteur (12) et susceptible de prendre deux positions par rapport à l'interrupteur (12), l'une moins en saillie et l'autre plus en saillie; un moyen (32) incorporé dans l'interrupteur (12) pour empêcher que le deuxième organe (31) prenne la position moins en saillie lorsque l'interrupteur est "fermé" et pour empêcher la fermeture de l'interrupteur (12) lorsque ledit deuxième organe (31) est dans la position moins en saillie, ladite glissière (16) coopérant avec ledit deuxième organe en saillie (31) pour le maintenir dans la position moins en saillie; deux encoches (33, 34) prévues dans ladite glissière (16) en correspondance des positions "hors circuit" et "connecté" de l'interrupteur (12) par rapport au secteur, afin de permettre que ledit deuxième organe (31) prenne sa position plus en saillie; un curseur (35) déplaçable le long de ladite glissière (16) contre l'action de moyens élastiques (43) d'une première position dans laquelle il empêche l'actionnement desdits moyens de commande (21, 23, 24) de déplacement du chariot à une deuxième position dans laquelle il rend possible un tel actionnement, ledit curseur (35) étant accessible de l'extérieur à travers un perçage (22) formée à travers la porte (11) du compartiment par un outil (25) pour actionner les moyens de commande (21, 23, 24), et des cames (45, 46) sur ledit curseur (35) susceptibles de coopérer avec ledit deuxième organe (31) en saillie de l'interrupteur (12) pour porter ledit organe (31) dans sa position moins en saillie à la suite du déplacement dudit curseur (35) de la position dans laquelle il empêche l'actionnement desdits moyens de commande (21, 23, 24) à la position dans laquelle il permet un tel actionnement, indépendamment de la position de l'interrupteur (12) dans les positions "connecté" et "hors circuit" par rapport au secteur.

2. Dispositif selon la revendication 1, caractérisé du fait que les moyens pour commander le mouvement de translation du chariot (26) sont constitués par un vis sans fin (21) supportée libre en rotation mais immobile axialement dans ladite glissière (16) en alignement axial avec le perçage (22) de la porte, ladite vis sans fin (21) étant engagée par un écrou d'entrainement passant (27) formé dans ledit chariot (26).

3. Dispositif selon la revendication 2, caractérisé du fait que la vis sans fin (21) a une tige cylindrique lisse (23) qui se prolonge jusqu'au perçage (22) de la porte et une portion (24) ayant une section transversale carrée éloignée de cette porte (11).

4. Dispositif selon la revendication 3, caractérisé du fait que ledit curseur (35) monté sur ladite glissière (16) a une paroi transversale (38) pourvue d'un perçage (44) pour le libre passage de la tige (23) et de la portion carrée (24) de la vis sans fin (21), ladite paroi transversale (38) étant interposée, dans ladite première position du curseur (35), entre la porte (11) et la portion carrée (24) de la tige (23) de la vis sans fin.

Fig.1

Fig.2

Fig.3

Fig.4

0 045 545

2